**Europäisches Patentamt**

**European Patent Office**

**Office européen des brevets**

(19)

Veröffentlichungsnummer: **0 262 352**
**A1**

# EUROPÄISCHE PATENTANMELDUNG

Anmeldenummer 87111568.9

Int Cl⁴ **H01S 3/03**

Anmeldetag **10.08.87**

Priorität **24.09.86 DE 3632502**

Veröffentlichungstag der Anmeldung
**06.04.88 Patentblatt 88/14**

Benannte Vertragsstaaten:
**AT CH DE ES FR GB IT LI NL**

Anmelder **Siemens Aktiengesellschaft Berlin
und München**
**Wittelsbacherplatz 2**
**D-8000 München 2(DE)**

Erfinder: **Welsch, Wolfgang, Dr. Ing.**
**Fuchsweg 25 b**
**D-8011 Baldham(DE)**

Gaslaser.

Ein Glasrohr (1), stirnseitige Endstücke (2, 3) aus Sinterglas, die Laserkapillare (8) und Halterungen (10) für die optischen Teile sind miteinander verschmolzen oder über Glaslot verbunden. Die Erfindung eignet sich insbesondere für Laser mit hoher Lichtausbeute. Sie gewährleistet eine hohe thermische Stabilität des Lasers.

FIG 1

EP 0 262 352 A1

## Gaslaser.

Die vorliegende Erfindung betrifft einen Gaslaser nach dem Oberbegriff des Patentanspruchs 1 Ein derartiger Gaslaser ist aus der DE-PS 25 06 707 bekannt Dort wird ein Laserrohr mit Metallkappen verschlossen. wobei der Temperaturkoeffizient der Metallkappen an den des Laserrohrs angepaßt ist. Eine derartige Metallkappe ist zwar weniger empfindlich als die früher verwendeten Endstücke aus Glas. sie kann mechanische Spannungen. die beispielsweise beim Justieren des Laserspiegels entstehen. aufnehmen. Sie kann aber auch die Spannungen an das Glasrohr so intensiv weitergeben. daß es zum Bruch an der Übergangsstelle kommt. Die Metallkappen können außerdem infolge der darauf unterzubringenden Durchführungen und des Pumpstengels bei Temperaturschwankungen der Umgebung unsymmetrischen Verformungen unterliegen. die zum Dejustieren des Laserstrahles und damit zu einem beträchtlichen Energieverlust führen. Wegen der unterschiedlichen Ausdehnungskoeffizienten von Glas und der Erdkappen ist ferner die Leistungsänderung in der "warm-up" Periode. die bis zu 15min betragen kann. sehr störend für viele Anwendungen.

Der vorliegenden Erfindung liegt bei einem Gaslaser der im Oberbegriff des Patentanspruchs 1 genannten Art die Aufgabe zugrunde. die Temperaturabhängigkeit der Laserleistung zu verringern und schädliche Verspannungen zu vermeiden und damit die Ausbeute in einer Serienfertigung zu steigern.

Diese Aufgabe wird durch die kennzeichnenden Merkmale des Patentanspruchs 1 gelöst. Endstücke aus Sinterglas sind in anderem Zusammenhang. z.B. bei Blitzröhren bekannt. Gemäß der vorliegenden Erfindung erfüllen Endstücke aus Sinterglas nicht nur die Bedingungen. daß sie vakuumdicht gestal tet werden können. sondern sie zeigen überraschenderweise auch eine geringere Verspannung der Röhre beim Zusammenbau und beim Justieren der Spiegel und eine geringere Empfindlichkeit gegen die mechanischen Verspannungen und gewährleisten eine dauerhafte, hochpräzise Fixierung der Kapillare und der Spiegelhalterungen.

Besonders vorteilhaft ist eine Ausführungsform. in der das Glasrohr. das Endstück und die Kapillare aus demselben Glas bestehen. Dabei liegt das Endstück wiederum in Form eines Sinterglases vor. Bei dieser Ausführungsform passen die Temperaturkoeffizienten exakt zueinander. die einzelnen Teile können unmittelbar miteinander verschmolzen sein. Dadurch ergibt sich eine besonders geringe Empfindlichkeit gegenüber Temperaturschwankungen und eine extrem hohe Genauigkeit der Spiegeljustierung und damit eine sehr hohe Ausbeute an Laserlicht Als Schmelztemperatur zum Verbinden der einzelnen Teile kann bei den hier geeigneten Glassorten eine Temperatur von 500°C dienen Bei dieser niedrigen Temperatur ist eine Temperung auch dann überflüssig. wenn alle zu verschmelzenden Teile eines Lasers in einem Arbeitsgang miteinander verschmolzen werden. Temperaturunabhängigkeit und Strahlgenauigkeit sind in dieser Ausführung deutlich besser als bei Verwendung der besten zur Verfürung stehenden Metallkappen Eine weitere Verbesserung liegt darin. daß der Gaslaser keinen Pumpstengel besitzt und daß zumindest eine Oberfläche der Endstücke nach dem Zusammenbau vakuumdicht verschmolzen ist. Durch diese Ausführung ist auch die geringe Unsymmetrie. die durch einen Pumpstengel hervorgerufen wird. und die dadurch bei Temperaturschwankungen hervorgerufene Lageänderung der optischen Teile vermieden. Die Leistungsinstabilität in der "warm-up"-Periode ist nicht mehr vorhanden.

Die Halterung für die Spiegel setzt sich dabei vorteilhaft aus einem dünnwandigen Rohr und einem teilweise dickwandigen Teil mit einer Ringnut zusammen. Das dünnwandige Rohr kann ohne störende Verspannungen in eine entsprechende Bohrung im Endstück eingesetzt und eingeschmolzen sein. während der dickwandige Teil mit der Ringnut in an sich bekannter Weise eine Justierung des Spiegels ermöglicht. Zur exakten Lagefixierung weist der dickwandige Teil eine Stufe zu einem dünnwandigen Endbereich auf. wobei auf diesen Endbereich das dünnwandige Rohr aufgeschoben und aufgelötet ist und wobei das dünnwandige Rohr an der Stufe anliegt.

Die Erfindung ermöglicht eine Weiterbildung in Form eines besonders günstigen Herstellungsverfahrens. wenn der Laser mit einer Aluminiumkathode ausgerüstet ist. wobei der Laser pumpstengellose Endstücke erhält. von denen zumindest eines aus gasdurchlässigem Sinterglas besteht. und wobei die pumpstengellosen Endstücke. das Glasrohr. die Laserkapillare und die Halterungen in einem Arbeitsgang miteinander verschmolzen oder verlötet werden. wobei anschließend Sauerstoff eingelassen und die im Glasrohr befindliche Aluminiumelektrode oxidiert wird. wobei der Sauerstoff wieder abgesaugt und das Lasergas eingelassen wird und wobei dann zumindest eine gasdurchlässige Oberfläche eines Endstückes vakuumdicht glattgeschmolzen und die Röhre dadurch gasdicht gemacht wird. Dieses Verfahren kann besonders vorteilhaft an einer größeren Zahl von Gaslasern gleichzeitig im selben Vakuumgefäß durchgeführt werden. Ein noch nicht dicht geschmolzenes Sinterglas läßt ausreichend Gas durch, so daß der beschriebene Gaswechsel unschwierig vonstatten geht. Das vakuumdichte Verschmelzen der Oberfläche kann anschließend durch eine kurzzeitige Erhöhung der Temperatur der äußeren Oberfläche einfach durchgeführt werden. Bei diesem Verfahren ist es vorteilhaft, wenn das Endstück eine relativ große Dicke aufweist, die zumindest dem Außendurchmesser der Laserkapillare entspricht.

Eine weitere vorteilhafte Möglichkeit zur rationellen Herstellung erfindungsgemäßer Gaslaser besteht im Einsatz von Glaslot zur Befestigung der Glasteile. Insbesondere ist ein Herstellungsverfahren für einen Gaslaser mit einer im Glasrohr befindlichen Aluminiumkathode vorteilhaft, bei dem zunächst die Metallteile (10, 17, 18 bzw. 10, 17, 23) miteinander hartverlötet werden, bei dem die Kapillare (8) in ihrer Lage gegenüber dem Glasrohr (1) fixiert wird, bei dem alle Teile der Röhre und entsprechende Glaslotringe in einer Lötvorrichtung lagerichtig übereinandergestapelt werden, bei dem in diesem Zustand Sauerstoff zur Oxydation der Aluminiumkathode eingeblasen, wieder abgesaugt und das Lasergas eingelassen wird und bei dem dann die gesamte Anordnung auf die Löttemperatur der Glaslotringe erwärmt wird und dadurch alle Glaslötungen in einem Arbeitsgang und vakuumdicht durchgeführt werden. Dabei reicht die Schwerkraft der übereinandergestapelten Teile der Laserröhre aus, um ein vakuumdichtes Verlöten der Röhrenteile zu gewährleisten. Das beschriebene Verfahren ermöglicht den Einsatz von kurzen Glasrohren, welche die Kapillare an einer mechanisch günstigen Stelle haltern. Dadurch kann auf eine zusätzliche Abstützung der Kapillare auch bei relativ großer Baulänge verzichtet werden. Dies ist durch die Fähigkeit des Glaslotes, mechanische Spannungen aufzunehmen, ermöglicht, ohne daß eine gegenüber anderen Bauformen von Laserröhren erheblich größere Bruchgefahr in Kauf genommen werden muß.

Die Erfindung wird nun anhand von zwei Figuren näher erläutert. Sie ist nicht auf die in den Figuren gezeigten Beispiele beschränkt.

Das Gasentladungsgefäß eines Gaslasers ist aus einem Glasrohr 1 und Endstücken 2 und 3 zusammengesetzt. Die Endstükke 2 und 3 bestehen aus Sinterglas und weisen Bohrungen 4 und 5 auf. Sie sind mittels Glaslot mit dem Glasrohr 1 vakuumdicht verbunden. Hierbei kann das Glaslot Spannungen aufnehmen, die infolge geringfügiger Unterschiede im Temperaturausdehnungskoeffizienten zwischen dem Endstück und dem Glasrohr entstehen. Die Endstücke 2 und 3 weisen je einen erweiterten Außenbereich 6 der Bohrungen 4, 5 auf, in die ein dünnwandiger Teil 9 einer Spiegelhalterung 10 eingesetzt ist. Die dünnwandigen Teile 9 liegen an einer Stufe 11 am Ende des jeweiligen erweiterten Außenbereiches 6 an und sind mit den Endstücken 2, 3 durch eine Glas-Metall-Verschmelzung verbunden. An die dünnwandigen Teile 9 der Halterung 10 schließt sich ein teilweise dickwandiger Teil 14 mit einer Ringnut 12 an, wobei durch eine Verformung der Halterung 10 im Bereich der Ringnut 12 eine Spiegeljustierung möglich ist. Ein Endbereich 13 des teilweise dickwandigen Teiles 10 ist dünnwandig und weist einen relativ geringen Außendurchmesser auf. Auf diesen Bereich 13 ist das dünnwandige Teil 9 in Gestalt eines Metallrohres aufgeschoben und hart aufgelötet.

Einseitig ist in eine Erweiterung 7 der Bohrung 4 die Laserkapillare 8 eingesetzt und mit dem Endstück 2 mittels Glaslot verlötet. Alle Glaslotverbindungen können in einem einzigen Lötvorgang durchgeführt werden, wenn das benötigte Glaslot in Form von Glaslotringen beim Zusammensetzen der Einzelteile eingebracht wird.

In einer vorteilhaften Ausführungsform sind das Glasrohr 1, die Endstücke 2 und 3 und die Laserkapillare 8 aus demselben Glas hergestellt. In diesem Fall kann vorteilhaft auf die Verwendung von Glaslot verzichtet und die Verbindung der Einzelteile durch eine Glasverschmelzung durchgeführt werden.

Die Endstücke sind zumindest an ihrer Oberfläche soweit glattgeschmolzen, daß sie die Laserröhre vakuumdicht abschließen. Dieses Glattschmelzen erfolgt zumindest bei einem der Endstücke 2 oder 3 vorteilhaft erst nach dem Verlöten oder Verschmelzen der verschiedenen Glasteile miteinander. Dabei eignet sich insbesondere die äußere Oberfläche der Endstücke für eine abschließende Glattschmelzung, da dort auf einfache Weise Wärme von außen zugeführt werden kann. Bei dem Schmelzpunkt der hier in Frage kommenden Gläser von beispielsweise 500°C kann das Glattschmelzen ohne Schwierigkeiten und ohne Gefahr nach dem Einsetzen der Halterung 10 erfolgen, wobei gleichzeitig die Metall-Glas-Verschmelzung mit der Halterung 10 entsteht.

Vor dem Glattschmelzen ist das entsprechende Endstück 2 und/oder 3 so porös und gasdurchlässig, daß ohne Schwierigkeiten durch das Endstück hindurch Gas aus der Röhre abgesaugt und wieder eingeblasen werden kann. In diesem Fall ist ein Herstellungsverfahren vorteilhaft einsetzbar, in dem eine größere Anzahl von Röhren in einem Rezipienten untergebracht und dort zunächst einer Sauerstoffatmosphäre zur Oxidation der in üblicher Weise aus Aluminium bestehenden Kathoden ausgesetzt wird, in dem nach der gewünschten Oxidation der Sauerstoff abgepumpt und dann das Lasergas eingelassen wird und in dem -

schließlich das Glattschmelzen der Endstücke in der Lasergas-Atmosphäre stattfindet. Bei diesem Verfahren ist es möglich, pumpstengellose Laserröhren der beschriebenen Art herzustellen Derartige Laserröhren sind besonders unempfindlich gegen Temperaturschwankungen, da auch die Umsymmetrie in den Endstücken wegfällt, die durch den beim Stand der Technik erforderlichen Pumpstengel hervorgerufen wird

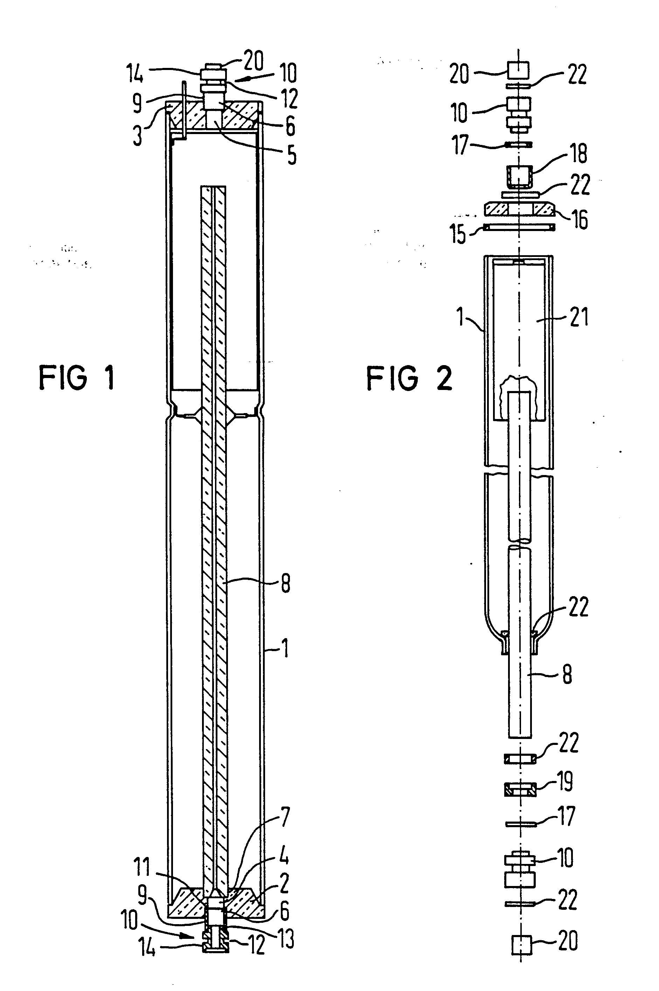

Fig 2 zeigt ein Beispiel eines erfindungsgemäßen Gaslasers in Form einer Explosionszeichnung in teilweise gegeschnittener Darstellung

An eine Stirnseite des Glasrohres 1 schließen ein Glaslotring 15 und ein pumpstengelloses Endstück 16 aus Sinterglas an. Die Metallteile, nämlich das Metallrohr 18, der Hartlotring 17 und die Halterung 10 bzw. die Metallkappe 19, der Hartlotring 17 und die Halterung 10 am anderen Ende des Lasers werden vorab miteinander verlötet. Je ein Glas lotring 22 dient zur Befestigung der Spiegel 20, des Metallrohres 18 und der Metallkappe 19 an den benachbarten Teilen und der Kapillare 8 am Glasrohr 1. Alle Teile der Laserröhre werden in einem vorteilhaften Verfahren lagerichtig in einer nicht dargestellten Lötvorrichtung übereinander gestapelt. Die Glaslötungen werden dann in einem Arbeitsgang durchgeführt. Dabei wird die Kapillare 8 durch eine Klemmvorrichtung in der gewünschten Lage relativ zum Glasrohr 1 gehalten. In diesem Zustand wird Sauerstoff zur Oxidation der Aluminiumkathode 21 eingeblasen und wieder abgepumpt und dann das Lasergas eingelassen. Der hierzu erforderliche Gasaustausch erfolgt durch die stets vorhandenen Restspalte zwischen den Glaslotringen 15, 22 und den benachbarten Teilen. Anschließend wird die Anordnung auf die Löttemperatur der Glaslotringe 15, 22, vorteilhaft etwa auf 500°C erwärmt, so daß alle Glaslötungen in einem Arbeitsgang durchgeführt werden. Die Teile werden dabei durch die Schwerkraft ausreichend aufeinandergedrückt, so daß vakuumdichte Glaslötungen entstehen.

Der erfindungsgemäße Aufbau eines Gaslasers ermöglicht eine beträchtliche Erhöhung des Wirkungsgrades durch eine optimale Justierung der Spiegel, da sich die Justierung nicht nachträglich verändert, und durch ein Höchstmaß an Unempfindlichkeit gegenüber Temperaturschwankungen und erlaubt gleichzeitig eine kostengünstige Herstellung des Lasers, insbesondere auch die gleichzeitige Fertigstellung einer Vielzahl von Lasern in ein und demselben Vakuumofen.

## Ansprüche

1. Gaslaser mit einer Laserkapillare und einem Entladungsgefäß, wobei die Laserkapillare einseitig mit dem Entladungsgefäß starr verbunden ist, und mit optischen Teilen, welche an einer Halterung aus Metall befestigt sind, wobei die Halterung eine Bohrung besitzt, welche koaxial zur Laserkapillare verläuft und wobei das Entladungsgefäß aus einem Glasrohr und zumindest einem stirnseitig an das Glasrohr anschließenden Endstück zusammengesetzt ist, wobei das Endstück eine zur Kapillare konzentrische Bohrung enthält, **dadurch gekennzeichnet**, daß das Endstück aus Sinterglas besteht und mit dem Glasrohr vakuumdicht verbunden ist, daß die Laserkapillare mit dem Endstück starr verbunden ist und daß die Halterung einen dünnwandigen Teil aufweist, welcher mit dem Endstück verlötet oder verschmolzen ist.

2. Gaslaser nach Anspruch 1, **dadurch gekennzeichnet**, daß das Glasrohr, daß Endstück und die Kapillare aus demselben Glas bestehen.

3. Gaslaser nach Anspruch 1, **dadurch gekennzeichnet**, daß kein Pumpstengel vorgesehen ist und daß zumindest eine Oberfläche der Endstücke nach dem Zusammenbau vakuumdicht verschmolzen ist.

4. Gaslaser nach einem der Ansprüche 1 bis 3, **dadurch gekennzeichnet**, daß die Halterung aus einem dünnwandigen Rohr und einem teilweise dickwandigen Teil mit einer Ringnut zusammengesetzt ist.

5. Gaslaser nach Anspruch 4, **dadurch gekennzeichnet**, daß der teilweise dickwandige Teil eine Durchmesserstufe zu einem dünnwandigen Endbereich besitzt, daß auf diesen Endbereich das dünnwandige Rohr aufgeschoben und aufgelötet ist und an der Durchmesserstufe anliegt.

6. Gaslaser nach Anspruch 1, **dadurch gekennzeichnet**, daß das Endstück, die Spiegel und die Kapillare mit den angrenzenden Teilen der Laserröhre durch Glaslot verbunden sind, daß das Glasrohr an einer Stirnseite einen Endbereich mit einem verringerten Durchmesser aufweist, daß die Kapillare über das Glasrohr vorsteht und daß der Endbereich mit der Kapillare über Glaslot verbunden ist.

7. Verfahren zur Herstellung eines Gaslasers mit einer Aluminiumkathode nach einem der Ansprüche 1 bis 6, **dadurch gekennzeichnet**, daß die pumpstengellosen Endstücke, das Glasrohr, die Laserkapillare und die Halterungen in einem Arbeitsgang miteinander verschmolzen bzw. verlötet werden, daß bei diesem Vorgang zumindest ein Endstück aus gasdurchlässigem Sinterglas besteht, daß anschließend Sauerstoff eingelassen und die im Glasrohr befindliche Aluminiumkathode oxidiert wird, daß der Sauerstoff abgesaugt und das Lasergas eingelassen wird und daß dann zumindest eine gasdurchlässige Oberfläche eines Endstückes vakuumdicht glattgeschmolzen und die Röhre dadurch gasdicht gemacht wird.

8. Verfahren zur Herstellung eines Gaslasers mit einer Aluminiumkathode nach Anspruch 6, **dadurch gekennzeichnet,** daß zunächst die Metallteile (17, 18, 19) miteinander hartverlötet werden, daß die Kapillare (8) in ihrer Lage gegenüber dem Glasrohr (1) fixiert wird, daß alle Teile der Röhre und entsprechende Glaslotringe (15,22) in einer Lötvorrichtung lagerichtig übereinander gestapelt werden, daß in diesem Zustand Sauerstoff zur Oxydation der Aluminiumkathode eingeblasen, wieder abgesaugt und das Lasergas eingelassen wird und daß dann die gesamte Anordnung auf die Löttemperatur der Glaslotringe (15, 22) erwärmt wird und dadurch alle Glaslötungen in einem Arbeitsgang durchgeführt werden.

FIG 1

FIG 2

Europäisches
Patentamt

**EUROPÄISCHER RECHERCHENBERICHT**

Nummer der Anmeldung

EP 87 11 1568

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-B-2 506 707 (SIEMENS)<br>* Figuren 1,2; Spalte 3, Zeile 28 - Spalte 4, Zeile 47 *<br>--- | 1 | H 01 S 3/03 |
| A | US-A-4 203 050 (W. RECH et al.)<br>* Spalte 1, Zeilen 5-9; Spalte 2, Zeilen 7-31 *<br>--- | 1 | |
| A | EP-A-0 166 029 (SIEMENS)<br>----- | | |

**RECHERCHIERTE SACHGEBIETE (Int. Cl.4)**

H 01 S

Der vorliegende Recherchenbericht wurde für alle Patentansprüche erstellt

| Recherchenort | Abschlußdatum der Recherche | Prüfer |
|---|---|---|
| DEN HAAG | 29-12-1987 | CONRAD V.HEYDENDORFF K. |